# EUROPÄISCHE PATENTANMELDUNG

(11) **EP 1 156 310 A1**
(43) Veröffentlichungstag der Anmeldung: **21.11.2001**
(21) Anmeldenummer: 99126251.0
(22) Anmeldetag: 31.12.1999
(51) Int. Cl.: G01J 3/02

(54) **Optisches Referenzelement und Verfahren zur spektralen Kalibrierung eines optischen Spektrumanalysators**

(71) Anmelder: Acterna Eningen GmbH, 72800 Eningen (DE)
(72) Erfinder: Löcklin, Eberhard, Dr., 72766 Reutlingen (DE)
(74) Vertreter: Klocke, Peter, Dipl.-Ing.

(57) **Zusammenfassung**

Optisches Referenzsignal mit einem in einem Raum eingeschlossenen Gas, eine Lichtleitfaser und eine den aus der Lichtleitfaser austretenden Lichtstrahl vor dem vorderen stirnseitige Ende des Raumes sammelnde Linse und einen Fotodetektor am hinteren stirnseitigen Ende des Raumes, der mit einer Auswerteeinrichtung verbindbar ist. Ein derartiges optisches Referenzelement erlaubt es, mit kostengünstigen und allgemein erhältlichen Bauelementen ein Referenzsignal zur Kalibrierung beispielsweise eines optischen Spektrumanalysators bereit zu stellen. Das optische Referenzelement wird an den Ausgang der optischen Anordnung angeschlossen.

## Beschreibung

Die vorliegende Erfindung betrifft ein optisches Referenzelement sowie ein Verfahren zur spektralen Kalibrierung eines optischen Spektrumanalysators mit Fasereingang bei dem mittels eines Referenzsignals nach Durchlaufen des optischen Spektrumanalysators dieser kalibriert wird.

Es ist beispielsweise aus der EP 0 758 075 A1 bekannt, optische Spektrumanalysatoren zu kalibrieren, in dem der optische Spektrumanalysator mit einem Referenzsignal mit genau bekannter Wellenlänge beaufschlagt wird. Mittels des am Ausgang des optischen Spektrumanalysators ankommenden Referenzsignals wird unter Berücksichtigung des Drehwinkels, beispielsweise des Beugungsgitters, der optische Spektrumanalysator kalibriert. Zur Erzeugung einer eindeutigen Referenzwellenlänge wird hierzu eine Gasabsorptionszelle mit einem bestimmten Gas genau bekannter Wellenlänge beziehungsweise Wellenlängenspektrum verwendet.

Gasabsorptionszelle, so ist das Gas in der Regel in einer abgeschmolzenen Glasröhre mit schlechten optischen Eigenschaften der Endflächen eingeschlossen. Aufgrund dieser schlechten Oberflächenqualität ist eine Abbildung durch diese Röhre hindurch in eine Einmodenfaser mit sehr hohen Lichtverlusten verbunden, da dann die auf einen Fleck von ca. 10 um fokussierte Leistung zur zu kalibrierenden optischen Anordnung transportiert wird. Um dies zu verhindern, ist die Verwendung einer sehr leistungsstarken und damit teuren Referenzlichtquelle oder eines Gasgefäßes mit geschliffenen teuren Oberflächen notwendig.

Der vorliegenden Erfindung liegt daher die Aufgabe zugrunde, eine Möglichkeit vorzuschlagen, mit der insbesondere bei optischen Spektrumanalysatoren möglichst einfach und unter Verwendung von gewöhnlichen, handelsüblichen Bauteilen ein Referenzsignal zur Kalibrierung von optischen Anordnungen realisiert werden kann.

Diese Aufgabe wird erfindungsgemäß durch ein optisches Referenzelement mit den Merkmalen des Anspruchs 1 gelöst. Weitere vorteilhafte Ausgestaltungen sind den Unteransprüchen zu entnehmen. Die Aufgabe wird außerdem durch ein Verfahren zur spektralen Kalibrierung eines optischen Spektrumanalysators mit Fasereingang gemäß den Merkmalen des Anspruchs 6 gelöst.

Gemäß der Erfindung wird ein optisches Referenzelement vorgeschlagen, das einen Raum, vorzugsweise Glasröhre, mit einem eingeschlossenen Gas aufweist. Der aus der Lichtleitfaser austretende Strahl wird durch eine Linse vor dem vorderen stirnseitigen Ende des Raumes gesammelt. Eine derartige Linse reduziert die Baugröße, wobei besonders vorteilhaft eine Linse mit sich kontinuierlich ändernder Brechzahl (Gradientenindexlinse) ist. Das optische Referenzelement weist außerdem vor dem hinteren stirnseitigen Ende des mit Gas gefüllten Raumes einen Fotodetektor auf, der mit einer Auswerteeinrichtung verbindbar ist. Dabei kann der Fotodetektor entweder direkt oder mit geringem Abstand zu dem Raum angeordnet sein.

Durch diese Ausgestaltung wird ein optisches Referenzelement geschaffen, das als ein Bauteil herstellbar ist und am Ausgang einer optischen Anordnung mit Faserausgang, wie beispielsweise optischem Spektrumanalysator, angeschlossen werden kann. Die Abbildung der Referenzwellenlänge mittels dieses optischen Referenzelements erfolgt damit nach der optischen Anordnung. Infolgedessen ist die eingangs erwähnte besondere Abbildungsqualität nicht mehr erforderlich, da das optische Signal nach verlassen des mit Gas gefüllten Raumes gleich in ein elektrisches Signal umgewandelt wird. Hierzu ist es ausreichend, dass der Lichtstrahl nach dem Raum auf eine entsprechend große Fotodiode trifft.

Um eine möglichst kompakte Bauweise zu erreichen, ist gemäß einer weiteren vorteilhaften Ausgestaltung der Fotodetektor direkt mit dem Raum, vorzugsweise der Glasröhre, verbunden. Darüber hinaus ist die Linse als Gradientenindexlinse ausgebildet und ebenfalls direkt mit der Glasröhre verbunden.

Vorzugsweise sind die Linse, der mit Gas gefüllte Raum und Fotodetektor in einem Gehäuse, beispielsweise in einer zylindrischen Hülse mit oder ohne stirnseitigen Verschlüssen, aus denen lediglich die Lichtleitfaser-Zuleitung sowie die Anschlüsse des Fotodetektors herausragen, integriert.

Anhand der nachfolgenden Figuren wird die Erfindung näher erläutert. Es stellen dar:
- Figur 1: ein Blockschaltbild mit der prinzipiellen Anordnung des optischen Referenzelements und
- Figur 2: ein Längsschnitt durch das optische Referenzelement.

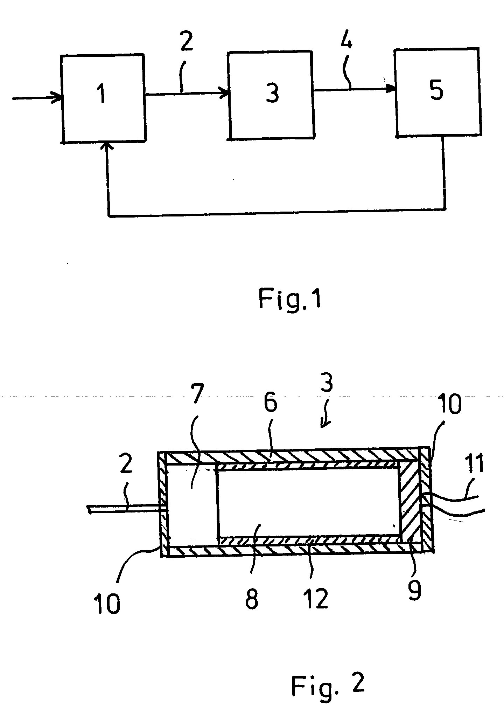

Gemäß dem prinzipiellen Blockschaltbild in Figur 1 trifft das zu analysierende Licht, im vorliegenden Fall das Referenzlicht, auf den Eingangsspalt eines optischen Spektrumanalysators 1. Als Lichtquelle für das Referenzsignal eine breitwandige Lichtquelle (LED), die über eine Einmodenfaser mit dem optischen Spektrumanalysator 1 verbunden ist. Der optische Aufbau eines optischen Spektrumanalysators 1 ist allgemein bekannt und beispielsweise in dem Buch Fiber Optic Test and Measurement, from Dennis Derickson, 1998, ISBN 0-13- 534330-5 beschrieben. Vom Ausgang des optischen Spektrumanalysators 1 wird das Licht über eine Lichtleitfaser 2, zu dem optischen Referenzelement 3 geleitet. Das optische Referenzelement 3 liefert elektrische Signale über die Leitung 4 zu dem Computer 5, der in bekannter Art und Weise diese auswertet und den optischen Spektrumanalysator 1 in Abhängigkeit von dem Drehwinkel des Beugungsgitters im optischem Spektrumanalysator 1 kalibriert.

Figur 2 zeigt im Querschnitt das optische Referenzelement 3 mit einem hülsenförmigen Gehäuse 6, in dem sich eine Gradientenindexlinse 7, eine Absorptionszelle 8 und ein Fotodetektor 9 befinden. In dem Ausführungsbeispiel ist das Gehäuse 6 stirnseitig mit zwei Abdeckscheiben 10 verschlossen, durch die die Lichtleitfaser 2 bzw. die Anschlussleitungen 11 hindurchgeführt sind. Die Lichtleitfaser ist direkt mit der Gradientenindexlinse 7 verbunden. Diese wiederum ist direkt am stirnseitigen Ende der ebenfalls zylindrisch ausgebildeten Absorptionszelle 8 angeordnet. In der Absorptionszelle 8 befindet sich in einer Glasröhre 12 das für die Referenz erforderliche Gas. Am anderen stirnseitigen Ende der Glasröhre 12 ist der Fotodetektor 9 direkt angebracht. Die Gradientenindexlinse 7 sowie der Fotodetektor 9 können mit einem geeigneten Kleber an der Glasröhre 12 festgeklebt sein.

Ein derart ausgestaltetes optisches Referenzelement ist aus üblichen und einfach erhältlichen Bauteilen zusammensetzbar und ideal geeignet, ein gewünschtes Referenzsignal zum Kalibrieren einer optischen Anordnung, insbesondere eines optischen Spektrumanalysators, bereitzustellen.

## Patentansprüche

**1.** Optisches Referenzelement, **gekennzeichnet durch**
einen mit Gas gefüllten Raum (12), eine Lichtleitfaser (2) und eine Linse (7) zwischen dem Raum (12) und der Lichtleitfaser (2), die den aus der Lichtleitfaser (2) austretenden Lichtstrahl sammelt, sowie einen Fotodetektor (9) am hinteren stirnseitigen Ende des Raumes (12), der mit einer Auswerteeinrichtung (5) verbindbar ist.

**2.** Optisches Referenzelement nach Anspruch 1, **dadurch gekennzeichnet**, dass das Gas in einer Glasröhre (12) eingeschlossenen ist.

**3.** Optisches Referenzelement nach Anspruch 1 oder 2, **dadurch gekennzeichnet**, dass der Fotodetektor (9) direkt mit dem gasgefüllten Raum (12) verbunden ist.

**3.** Optisches Referenzelement nach Anspruch 1 oder 2, **dadurch gekennzeichnet**, dass die Linse (7) als Gradientenindexlinse ausgebildet und direkt mit dem gasgefüllten Raum (12) verbunden ist.

**4.** Optisches Referenzelement nach Anspruch 1 oder 2, **dadurch gekennzeichnet**, dass die Linse (7), Raum (12) und Fotodetektor (9) in einem hülsenförmigen Gehäuse (6) integriert sind.

**5.** Optisches Referenzelement nach einem der vorangegangenen Ansprüche, **dadurch gekennzeichnet**, dass es am Ausgang eines optischen Spektrumanalysators (1) angeordnet ist.

**6.** Verfahren zur spektralen Kalibrierung eines optischen Spektrumanalysators mit Fasereingang bei dem mittels eines Referenzsignals nach Durchlaufen des optischen Spektrumanalysators der optische Spektrumanalysator kalibriert wird, **dadurch gekennzeichnet**, dass zur Erzeugung des Referenzsignals das Licht einer breitbandigen Lichtquelle mittels einer Einmodenfaser direkt dem Eingang des optischen Spektrumanalysators zugeführt, und nach Durchlaufen des optischen Spektrumanalysators das Licht am Ausgang auf einen mit Gas gefüllten Raum (12) mit einem daran anschließenden Fotodetektor (9) geführt wird.

**7.** Verfahren nach Anspruch 1, **dadurch gekennzeichnet,** dass das Licht über eine Faser (2) und einer Gradientenindexlinse (7) dem Raum (12) zugeführt wird.

**8.** Verwendung eines mit Gas gefüllten Raumes (12) mit einem auf einer Stirnseite des Raumes angeordneten Fotodetektor am Ausgang eines optischen Spektrumanalysators als Referenzzelle zur spektralen Kalibrierung des optischen Spektrumanalysators.
